Europäisches Patentamt

European Patent Office

Office européen des brevets

(11) **EP 0 480 502 B1**

(19)

(12) # FASCICULE DE BREVET EUROPEEN

(45) Date de publication et mention
de la délivrance du brevet:
**04.09.1996 Bulletin 1996/36**

(51) Int Cl.⁶: **H04L 5/14**, H04L 12/28,
H04H 1/04, H04L 1/20

(21) Numéro de dépôt: **91202526.9**

(22) Date de dépôt: **27.09.1991**

(54) **Réseau câblé et dispositif modulateur-démodulateur pour un tel réseau**

Kabelnetzwerk und Modemeinrichtung für ein solches Netzwerk

Cable network and modem apparatus for such a network

(84) Etats contractants désignés:
**AT DE FR GB SE**

(30) Priorité: **05.10.1990 FR 9012305**

(43) Date de publication de la demande:
**15.04.1992 Bulletin 1992/16**

(73) Titulaires:
• **PHILIPS ELECTRONIQUE GRAND PUBLIC**
  **92150 Suresnes (FR)**
  Etats contractants désignés:
  **FR**
• **Philips Electronics N.V.**
  **5621 BA Eindhoven (NL)**
  Etats contractants désignés:
  **DE GB SE AT**

(72) Inventeur: **Lamy, Bernard**
**F-75008 Paris (FR)**

(74) Mandataire: **Caron, Jean et al**
**Société Civile S.P.I.D.**
**156, Boulevard Haussmann**
**75008 Paris (FR)**

(56) Documents cités:
**EP-A- 0 010 344          EP-A- 0 325 331**

• **IEEE PROCEEDINGS OF THE 11th**
  **CONFERENCE ON LOCAL COMPUTER**
  **NETWORKS, Minneapolis, Minnesota, 6-8**
  **octobre 1986, pages 46-55, IEEE, Los Angeles,**
  **US; K. PRASAD: "Design of 'Transnet' a special**
  **local area network"**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un réseau cablé arborescent et interactif destiné à desservir des appareils à la fois émetteurs et récepteurs qui comportent un dispositif modulateur-démodulateur, ces derniers fonctionnant en émission dans une première gamme de fréquences, c'est-à-dire avec une première fréquence porteuse, et en réception dans une deuxième gamme de fréquences, c'est-à-dire avec une deuxième fréquence porteuse, chacune des deux susdites gammes de fréquences étant divisée en une pluralité de sous-gammes utilisant chacune une fréquence porteuse différente, cet ensemble d'appareils étant associé à un serveur central avec au moins un dispositif modulateur-démodulateur de tête.

Un tel réseau est utilisé par exemple pour transmettre des programmes de télévision ou de radio à des usagers tout en permettant le transport et le traitement de données numériques "remontantes" émanant des abonnés à destination de la tête du réseau.

Un des points clés d'un tel système est le développement de dispositifs modulateurs-démodulateurs spécifiques bidirectionnels, et l'invention concerne donc également les dispositifs modulateurs-démodulateurs d'un tel réseau.

Un réseau qui correspond au préambule ci-dessus est décrit dans l'article de K. Prasad : "Design of 'Transnet' a special local area network", IEEE 11th conference on Local Computer Networks, 6th-8th Oct, 1986 ; IEEE New York US ; pages 46-55. Selon ce document, un réseau arborescent est utilisé pour différents usages ("TV, data communications, voice systems"). Il y a une gamme de fréquences pour des canaux sortants ("outbound") et une autre gamme de fréquences pour des canaux entrants ("inbound"), chacune des voies d'information empruntant une sous-gamme spécifique (appelée "channel" dans le document). Néanmoins un même canal physique est utilisé pour tous les canaux. A cause de la bande large d'un tel canal commun, le bruit est important et les informations remontantes peuvent être difficiles à démoduler correctement, notamment du fait que les voies remontantes sont plus polluées par le bruit que les voies descendantes, car le réseau constitue dans ce sens une antenne et un collecteur de bruits de toutes sortes.

Un but de l'invention est de pallier cet inconvénient.

Selon l'invention, chaque appareil, à la fois émetteur et récepteur, étant destiné à recevoir un programme de télévision ou de radio, le serveur central est muni d'un dispositif modulateur-démodulateur de tête pour chacune des sous-gammes, et plusieurs appareils d'une même sous-gamme, c'est-à-dire travaillant avec la même paire de fréquences porteuses, sont reliés à un même dispositif modulateur-démodulateur de tête, et pour chacun de ces dispositifs la fréquence porteuse de la première gamme est appariée avec la fréquence porteuse de la deuxième gamme, cependant que le serveur central est muni de moyens pour interroger tour à tour l'ensemble des appareils d'une même sous-gamme selon un processus de sondage circulaire.

Ainsi donc chacun des modulateurs-démodulateurs constitue un canal physique dont la largeur de bande et le bruit sont réduits par rapport à ce qui serait nécessaire pour la totalité de la largeur de l'ensemble des canaux. Du fait que plusieurs appareils utilisent une même sous-gamme, le nombre de modulateurs-démodulateurs distincts n'est pas trop élevé. Enfin le fait que les appareils soient interrogés tour à tour selon un processus de "polling" permet de traiter chacun des appareils d'une sous-gamme individuellement.

A priori, il serait nécessaire de disposer d'un type différent de dispositif modulateur-démodulateur pour chacune des sous-gammes. Il faudrait donc fabriquer un grand nombre de types de dispositifs modulateurs-démodulateurs différents, et gérer un stock diversifié. On a donc essayé d'obtenir qu'un dispositif modulateur-démodulateur d'un seul type puisse s'adapter aux différentes sous-gammes possibles. Cela permet en outre une allocation dynamique des fréquences : si dans une sous-gamme de fréquences la voie remontante est particulièrement polluée, il est possible de changer de sous-gamme.

A cet effet, un dispositif modulateur-démodulateur de tête est muni de moyens de détection de la qualité de réception des signaux provenant des appareils, de moyens pour déterminer, lorsque cette qualité est insuffisante, une nouvelle fréquence à utiliser, et de moyens pour incorporer dans le signal émis vers lesdits appareils des informations indiquant la nouvelle fréquence à utiliser.

Il est connu de mesurer le taux d'erreurs à partir des codes correcteurs utilisés à l'émission (qui permettent de détecter les erreurs au niveau de la réception). Mais cela n'est possible que lorsque de tels codes sont utilisés. L'invention permet une estimation du taux d'erreurs sur tout signal numérique.

A cet effet, les moyens de détection de la qualité de réception selon l'invention comportent une base de temps fournissant des fenêtres temporelles de largeur à peu près égale au quart d'un temps de bit et centrées sur les instants présumés des transitions du diagramme de l'oeil, un détecteur pour détecter une transition du signal située hors de ces fenêtres, un compteur pour compter le nombre de détections de telles transitions, compteur qui fournit un signal d'insuffisance de qualité pour un nombre prédéterminé de détections.

De tels moyens peuvent être réalisés très simplement : il suffit pour cela de les associer à la boucle de verrouillage de phase servant à la récupération du rythme en tête de réseau.

Chaque dispositif modulateur-démodulateur de tête est avantageusement muni de moyens pour incorporer dans le signal émis vers lesdits appareils des données identifiables qui servent à synchroniser les fréquences des dispositifs modulateurs-démodulateurs desdits appareils par rapport à celles du dispositif modulateur-démodulateur de tête.

Ainsi la réalisation des oscillateurs locaux dans les dispositifs modulateurs-démodulateurs d'usagers est plus économique du fait qu'ils ne nécessitent pas une grande précision intrinsèque puisqu'ils sont synchronisés par le dispositif modulateur-démodulateur de tête. En outre, le circuit de récupération de rythme au niveau du dispositif modulateur-démodulateur de tête peut être simplifié car, la fréquence étant connue exactement, seule la phase des données remontantes est à repérer (elle dépend notamment de la longueur de cable).

Dans un récepteur hétérodyne qui comporte un oscillateur local dont la fréquence est égale à la différence entre la fréquence de la porteuse reçue et la fréquence intermédiaire, il est connu, entre autres par l'abrégé de brevet japonais 58-210728, d'utiliser la fréquence de l'oscillateur local comme fréquence porteuse pour l'émission, afin d'éviter la nécessité d'employer deux oscillateurs distincts, ce qui serait coûteux. Toutefois dans le cas présent on désire que les fréquences d'émission et de réception soient situées dans des bandes de fréquences relativement éloignées : il n'est donc pas possible d'utiliser cette structure connue, et il faudrait en conséquence prévoir un oscillateur pilote pour chacune des fréquences respectivement d'émission et de réception.

Pour éviter cet inconvénient, dans un dispositif modulateur-démodulateur d'un appareil d'un réseau câblé selon l'invention, fonctionnant en émission dans une première sous-gamme et en réception dans une deuxième sous-gamme et associé, dans le dit appareil, à un émetteur-récepteur comportant une partie de réception hétérodyne utilisant une fréquence intermédiaire, la valeur de la fréquence d'émission est égale à la valeur de la fréquence de réception plus ou moins un premier nombre entier de fois la valeur de la susdite fréquence intermédiaire, le tout étant divisé par un deuxième nombre entier.

Lorsqu'un dispositif modulateur-démodulateur émet dans la gamme de fréquences 10-30 MHz et reçoit dans la gamme de fréquences 47-87 MHz en utilisant la fréquence intermédiaire 10,7 MHz, ledit premier nombre entier est avantageusement égal à un, et ledit deuxième nombre entier égal à trois.

Ainsi les fréquences peuvent être amenées dans les bandes prévues tout en respectant la relation désirée entre les fréquences.

Un dispositif modulateur-démodulateur selon l'invention est remarquable en ce qu'il comprend en outre un deuxième oscillateur dont la fréquence est commandable et un circuit d'asservissement muni d'une entrée pour un signal dont la fréquence doit être réglée et qui fournit un signal de commande de la fréquence du deuxième oscillateur en fonction de l'écart entre la fréquence du signal appliqué à ladite entrée et une fréquence de référence, en ce que les signaux des deux oscillateurs sont amenés respectivement à deux entrées d'un mélangeur, dont le signal mélangé est amené à un diviseur de fréquence dont le signal résultant est amené à l'entrée du circuit d'asservissement et en ce que le signal dudit deuxième oscillateur est amené à un diviseur de fréquence pour fournir en sortie de ce dernier le signal à fréquence d'émission du dispositif modulateur-démodulateur.

Ainsi une même référence de fréquence peut être utilisée à la fois pour la génération de la fréquence d'émission et pour l'adaptation à la fréquence de réception, c'est-à-dire pour la génération de la fréquence intermédiaire du récepteur.

Un dispositif modulateur-démodulateur selon l'invention est avantageusement muni de moyens pour aligner la fréquence du premier oscillateur local sur le rythme binaire des données provenant du dispositif modulateur-démodulateur de tête.

Ainsi l'erreur de fréquence moyenne de l'oscillateur local est mathématiquement nulle et donc sa mise en phase correcte peut être obtenue très rapidement, et sa dérive en température est annulée.

Un dispositif modulateur-démodulateur selon l'invention qui est interrogé par appel sélectif de la part d'un dispositif modulateur-démodulateur de tête, ce qui implique la possibilité de supprimer la porteuse des modems qui "n'ont pas la parole" à un instant donné, est avantageusement muni d'un circuit de servo-régulation de l'amplitude de la porteuse d'émission, et ce circuit est muni de moyens pour fournir au moins deux valeurs de consigne prédéterminées pour ladite amplitude, et de moyens pour que le passage de l'une à l'autre de ces valeurs se fasse avec un temps de transition prédéterminé.

Ainsi on évite la pollution des voies remontantes par les transitoires de commutation dûes aux extinctions et allumages successifs de la porteuse, et par la même occasion toute ondulation d'amplitude, dûe à la présence de filtres, est supprimée.

Un dispositif modulateur-démodulateur selon l'invention est avantageusement muni de moyens pour décoder dans un signal reçu d'un dispositif modulateur-démodulateur de tête une information sur la sous-gamme à utiliser et de moyens pour ajuster sa fréquence d'émission en fonction de cet ordre.

Cela permet d'adapter la fréquence, au niveau des appareils, en fonction de la pollution de la voie remontante bien qu'elle soit inconnue à ce niveau.

Pour simplifier la construction, dans un dispositif modulateur-démodulateur la modulation pour l'émission peut être appliquée directement sur le deuxième oscillateur qui engendre la porteuse émise. Un problème se pose alors : pour ne pas dégrader les spectre des données transmises, la constante de temps de la boucle à verrouillage de phase pilotant ce deuxième oscillateur doit être très élevée, et cependant du fait que les fréquences des dispositifs modulateurs-démodulateurs doivent pouvoir être ajustées dans une gamme de fréquences relativement large, une boucle stable satisfaisant la contrainte de constante de temps est irréalisable. Une solution connue consiste à utiliser plusieurs oscillateurs pour couvrir toutes les sous-gammes : cette solution est onéreuse.

Pour résoudre ce problème , le deuxième oscillateur est muni selon l'invention d'un circuit d'asservissement de fréquence qui comporte un filtre passe-bas à constante de temps réglable. Ce filtre passe-bas peut avantageusement être constitué par un interrupteur suivi d'une capacité, l'interrupteur étant commandé par une impulsion de durée constante déclenchée par le signal d'un oscillateur auxiliaire.

La possibilité de variation de la constante de temps est en outre très utile pour faciliter l'accrochage de la boucle.

La dispersion statistique des valeurs de diodes dites "varicap" qui sont utilisées de façon connue pour faire varier la fréquence de l'oscillateur pose un autre problème : le taux de modulation est susceptible de varier.

Pour pallier cet inconvénient, un dispositif modulateur-démodulateur selon l'invention est remarquable en ce qu'il comporte un démodulateur de fréquences pour démoduler sa propre fréquence intermédiaire.

Cela permet de connaître le taux de modulation et par conséquent de l'asservir pour le maintenir constant.

Ledit démodulateur peut avantageusement être muni de deux branches dont les signaux sortants sont multipliés, une première branche contenant un filtre passe-bande centré sur la valeur centrale nominale de la fréquence intermédiaire, et la deuxième branche contenant un réseau de déphasage destiné à introduire un déphasage égal à celui produit par le filtre dans la première branche.

Un tel démodulateur a une linéarité médiocre, mais ceci n'a pas d'importance pour l'utilisation envisagée. Par contre, il est économique et sensible, et il possède un fort taux de conversion et une bonne stabilité en température.

La description qui va suivre, en regard des dessins annexés décrivant des exemples non limitatifs fera bien comprendre comment l'invention peut être réalisée.

La figure 1 représente schématiquement un réseau cablé.

La figure 2 représente un diagramme de l'oeil pour illustrer le fonctionnement d'un dispositif de détection de la qualité de réception.

La figure 3 est un schéma d'un générateur de fréquences à utiliser dans un dispositif modulateur-démodulateur.

La figure 4 est un plan des fréquences, notées en référence aux éléments principaux du système.

La figure 5 est un schéma d'un circuit de servo-régulation de l'amplitude de la porteuse d'émission.

La figure 6 est un schéma d'un circuit de synchronisation des bases de temps entre un dispositif modulateur-démodulateur de tête et un dispositif modulateur-démodulateur d'usager.

La figure 7 est un schéma d'un circuit d'asservissement de fréquence qui comporte un filtre passe-bas à constante de temps réglable.

La figure 8 est un schéma d'un démodulateur de fréquences.

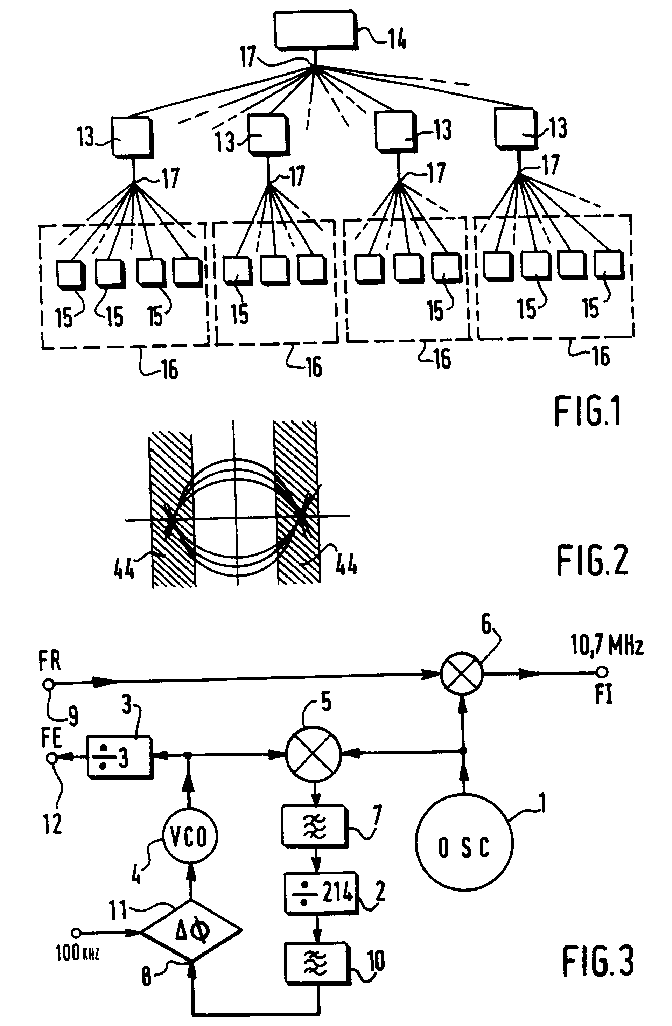

Le réseau cablé de la figure 1 sert à propager de l'information (par exemple des programmes de télévision ou de radio) depuis un serveur central 14 placé en tête de réseau jusqu'à un certain nombre d'appareils d'usagers abonnés 15. Il est arborescent, c'est-à-dire qu'il présente des "aiguillages" 17 successifs entre la tête et les usagers. Le serveur central 14 est muni de plusieurs dispositifs modulateurs-démodulateurs 13, dits modems de tête, desservant chacun un sous-ensemble 16 d'appareils d'usagers. Chaque appareil d'usager est capable de recevoir mais aussi d'envoyer de l'information, et à cet effet il comporte un dispositif modulateur-démodulateur, dit modem d'usager.

Ce system est interactif, c'est-à-dire qu'il permet le transport et le traitement de données numériques "remontantes" émanant des abonnés à destination de la tête du réseau. Ces données utilisent dans le présent exemple la gamme de fréquences 10-30 MHz. Le système permet aussi l'acheminement de données dans le sens "descendant" : il utilise à cet effet dans le présent exemple la gamme de fréquences 47-87 MHz.

Bien entendu, le réseau ici décrit concerne le dialogue entre usagers et serveur, les émissions de télévision proprement dites étant envoyées par les canaux habituels en dehors des bandes de fréquences mentionnées ici.

On suppose que la capacité maximale en nombre d'usagers à desservir est de cent mille. Avec un traitement par multiplex utilisant une porteuse unique, il serait nécessaire d'avoir une bande passante de plusieurs mégahertz. Ici l'ensemble des usagers est divisé en sous-ensembles de par exemple mille usagers environ. Chacune des deux susdites gammes de fréquences est divisée en une pluralité de sous-gammes ayant chacune des fréquences différentes, et chaque sous-gamme de la première gamme correspond à une sous-gamme de la deuxième gamme. Chaque sous-ensemble d'usagers utilise une sous-gamme avec une fréquence porteuse différente (il communique avec un modem distinct en tête de réseau), et tous les modems d'un même sous-ensemble utilisent la même sous-gamme. Il y a donc dans le présent exemple une centaine de porteuses au total (dans chaque direction) dans un réseau de dimension maximale occupé à 100%. L'occupation totale du spectre est la même qu'avec une fréquence unique, mais le bruit dans chaque voie remontante est beaucoup plus faible.

On a choisi dans le présent exemple d'utiliser la gamme de fréquences 12,9---19,5 MHz en cent canaux de 66 kHz chacun. Le nombre important de canaux et donc l'étroitesse des gammes de fréquences disponibles, ainsi que le débit numérique choisi (19,2 kHz),imposent l'utilisation d'une modulation à faible encombrement, robuste vis-à-vis du bruit et des pollutions diverses présentes sur la voie remontante. Une modulation FSK de type dit MDF-2 à indice faible (indice de 0,8) peut être choisie. En outre, pour conserver une efficacité spectrale maximale, on utilise un code NRZ. Dans le cas où un canal de la voie remontante s'avère néanmoins trop pollué, cette situation est détectée en tête du réseau, et un code est envoyé sur la voie descendante pour indiquer au modem d'usager un nouveau canal où se placer (du fait que le canal descendant a un bon rapport signal/bruit cette indication peut parvenir sans problème au modem d'usager), canal qui est soit un canal non encore utilisé, soit dans le cas d'un réseau totalement occupé un canal pour lequel on admettra une surcharge temporaire. Bien entendu le modem d'usager est muni de moyens (connus, et non représentés) pour décoder dans le signal reçu l'information sur la sous-gamme à utiliser et de moyens (également connus, et non représentés) pour ajuster sa fréquence d'émission en fonction de cet ordre. Au début d'une liaison, le modem d'usager utilise toujours une même fréquence dont il possède la valeur dans une mémoire permanente, et c'est après le début d'un échange que le modem de tête peut indiquer éventuellement une autre fréquence.

Ce procédé est avantageusement généralisé à l'ensemble des groupes d'usagers présents, c'est-à-dire qu'on gère en tête de réseau une allocation dynamique des fréquences porteuses, en temps réel, afin de diminuer le taux d'erreurs moyen.

Les signaux étant numériques, les moyens de détection de la qualité de réception des signaux provenant des appareils d'usager comportent une base de temps fournissant des fenêtres temporelles 44 (figure 2) de largeur à peu près égale au quart d'un temps de bit et centrées sur les instants présumés des transitions du diagramme de l'oeil. Ces fenêtres permettent d'exploiter les variations temporelles des transitions dues au bruit et aux différentes gigues de fréquence introduites dans le canal. Un détecteur détecte les transitions du signal situées hors de ces fenêtres qui sont ainsi considérées comme un bit faux. Un compteur est alors déclenché pour compter le nombre de détections de bits faux, et si l'on obtient plus de, par exemple, seize transitions erronées dans un temps prédéterminé (correspondant donc à un taux d'erreurs fixé), le compteur fournit un signal d'insuffisance de qualité. Ce signal est remis à zéro lorsque par exemple 64 bits corrects et consécutifs ont été reçus.

Les parties réceptrices des appareils d'usager utilisent de façon classique une fréquence intermédiaire (réception dite "hétérodyne"). Les fréquences d'émission et de réception des modems sont reliées par la relation :

$$FE = (FR - FI) / 3$$

où FE est la valeur de la fréquence d'émission, FR est la valeur de la fréquence de réception, et FI est la valeur de la fréquence intermédiaire.

Ainsi la valeur FE de la fréquence d'émission est égale à la valeur FR de la fréquence de réception plus ou moins un premier nombre entier de fois (ici "moins une fois") la valeur FI de la fréquence intermédiaire, le tout étant divisé par un deuxième nombre entier (ici "trois").

Pour le modem de tête on a bien entendu la relation réciproque :

$$FE = 3 FR + FI$$

Un générateur capable de fournir les fréquences nécessaires est représenté à la figure 3. Il est muni d'un premier oscillateur 1. La valeur de la fréquence de cet oscillateur est égale à la somme de la valeur FR de la fréquence de réception et de la valeur FI de la fréquence désirée comme fréquence intermédiaire. Le générateur comprend un deuxième oscillateur 4 dont la fréquence est commandable. Les signaux des oscillateurs 1 et 4 sont amenés respectivement à deux entrées d'un mélangeur 5 et le signal de sortie mélangé, dont la fréquence doit être égale à deux fois la fréquence intermédiaire désirée (ici 10,7 MHz), est amené via un filtre passe-bande 7 à un diviseur de fréquence 2 qui divise sa fréquence par 214, ce qui fournit un signal dont la fréquence doit donc être 100 kHz. Ce signal est amené via un filtre passe-bande 10 à l'entrée 8 d'un circuit d'asservissement 11 qui reçoit par ailleurs pour comparaison un signal de référence de fréquence à 100 kHz. Ce circuit d'asservissement 11 fournit (via un filtre passe-bas non représenté) un signal de commande de la fréquence du deuxième oscillateur 4. La fréquence de l'oscillateur 4 est donc ainsi réglée pour être décalée de 21,4 MHz (soit deux fois la fréquence intermédiaire désirée) par rapport à celle de l'oscillateur 1. Le signal du deuxième oscillateur 4 est amené à un diviseur 3 qui divise sa fréquence par trois, pour fournir sur une borne 12 un signal à fréquence d'émission.

Le signal de réception sur la borne 9 est amené à un mélangeur 6 avec le signal du premier oscillateur 1 pour fournir le signal à fréquence intermédiaire à 10,7 MHz.

Le modem de tête comporte une structure réciproque similaire.

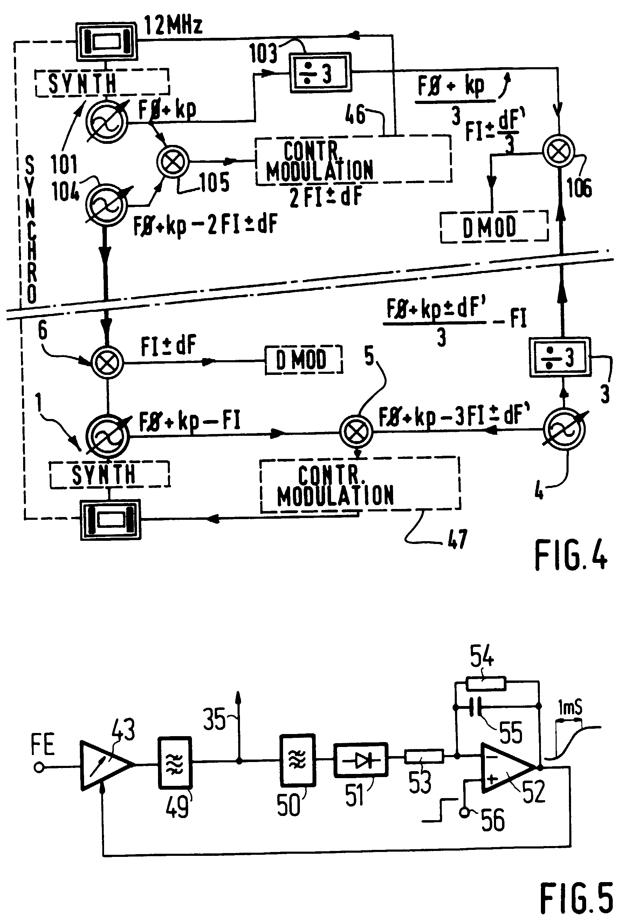

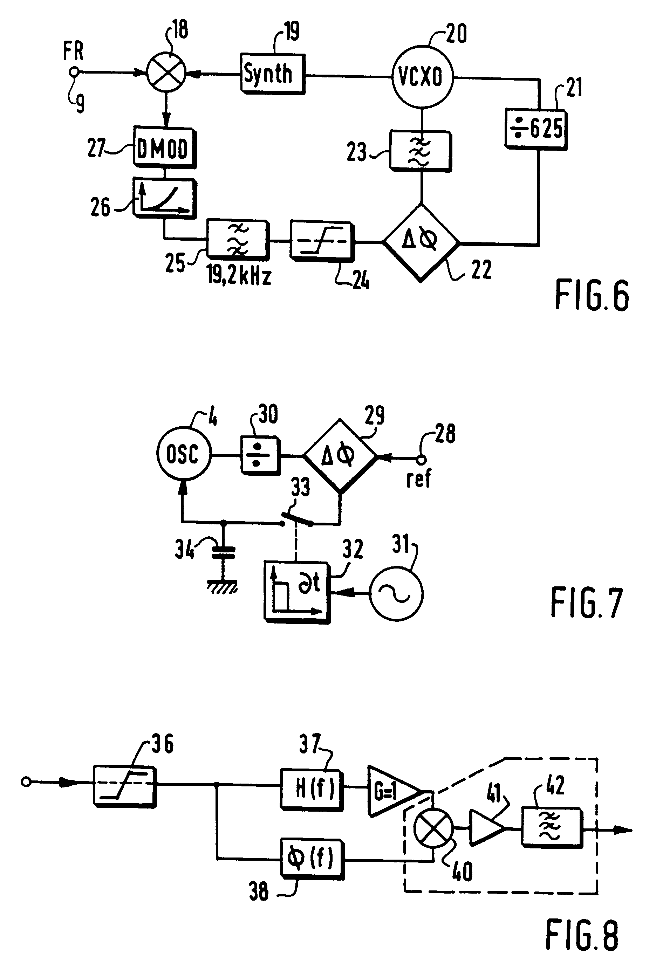

Sur la figure 4 qui indique les fréquences qui sont rencontrées dans l'ensemble du système, les éléments principaux 1, 3, 4, 5, 6 du générateur de la figure 3 sont rappelés schématiquement, ainsi que leurs équivalents dans les modems de tête, respectivement référencés 101, 103, 104, 105, 106. Chaque oscillateur pilote 1 ou 101 est un oscillateur à quartz avec un synthétiseur SYNTH, oscillateur dont la fréquence peut être ajustée pour correspondre à une sous-gamme déterminée. On a choisi dans le présent exemple d'utiliser en émission dans les modems d'usager la gamme de fréquences 12,9---19,5 MHz divisée en cent sous-gammes de 66,66 kHz chacune. Alors, dans les modems de tête, on utilise la gamme de fréquences 49,4---69,2 MHz en cent sous-gammes de 200 kHz chacune. La figure indique si le signal comporte une modulation et comment la fréquence dépend du canal utilisé (on appelle "canal" l'ensemble du matériel de transmission utilisant une sous-gamme de fréquences d'émission et une sous-gamme de fréquences de réception déterminées). Dans la figure 4, l'indice "k" est le rang ou numéro d'un canal, et "p" est la largeur d'un canal, au niveau de l'oscillateur pilote. Ici "p" est égal à 200 kHz pour tous les canaux et "k" peut varier de 0 à 99. La fréquence de l'oscillateur pilote du modem de tête du canal numéro 0 est notée "F0", et "F0+kp" est donc la fréquence de l'oscillateur pilote de tête pour le canal "k". Une modulation est représentée par "+/-df". Des éléments de contrôle de modulation 46, 47 seront décrits en détail plus loin à l'aide de la figure 8. Les démodulateurs "DMOD" qui fournissent en fin de compte les données à l'usager ou au serveur peuvent être des démodulateurs conventionnels. La ligne pointillée marquée "SYNCHRO" n'est pas une ligne matérielle, elle symbolise des moyens de synchronisation des oscillateurs qui seront décrits plus loin à l'aide de la figure 6.

A l'intérieur d'un même sous-ensemble, les usagers sont interrogés tour à tour selon un processus connu de "polling" circulaire. Ce processus implique la possibilité de supprimer la porteuse des modems d'usager qui "n'ont pas la parole" à un instant donné. Ceci est fait par exemple en inhibant le diviseur par trois (référence 3, figure 3). Cependant, la suppression et la remise en service périodiques de la porteuse introduit dans le canal un bruit de commutation très gênant. Pour éviter cela, on utilise un circuit particulier de servo-régulation de l'amplitude de la porteuse d'émission, qui est représenté à la figure 5. Le signal d'émission modulé, sur la borne FE, est repris dans un amplificateur 43 à gain réglable électriquement, suivi d'un filtre passe-bas 49, avant d'être finalement envoyé sur la liaison 35 vers les autres modems. Ce signal final est filtré dans un filtre 50, qui a pour but d'éliminer des parasites en provenance de la liaison 35, puis est redressé dans un redresseur 51. Un amplificateur opérationnel 52 a son gain fixé de façon connue par deux résistances 53, 54 dont le point milieu est relié à l'entrée "-" de l' amplificateur opérationnel. Le signal redressé est amené à cet amplificateur via la résistance 53. Une capacité 55 vient ralentir de façon connue les transitions à la sortie de l'amplificateur 52, sortie qui est reliée à l'entrée de commande de réglage de gain de l'amplificateur 43 de signal d'émission. Enfin, une tension 56 de commande de présence de porteuse est appliquée à l'entrée "+" de l'amplificateur opérationnel 52. On suppose que le gain de l'amplificateur 43 croît si la tension continue de commande de réglage de gain croît. A une valeur de la tension 56, il correspond une valeur de la tension redressée fournie par le redresseur 51. On comprend aisément que le circuit fonctionne en régulateur d'amplitude et agit sur le gain de l'amplificateur 43 pour maintenir l'amplitude à une valeur de consigne. Pour une valeur basse de la tension 56, le gain de l'amplificateur 43 est faible, et la porteuse sur la liaison 35 est atténuée. Pour une valeur plus élevée de la tension 56, la porteuse est régulée à une valeur de consigne. Il est donc possible de fournir au moins deux valeurs de consigne prédéterminées pour ladite amplitude. La capacité 55 qui ralentit les transitions à la sortie de l'amplificateur 52, constitue un moyen pour que le passage de l'une à l'autre de ces valeurs se fasse avec un temps de transition prédéterminé.

Avec une modulation telle que définie plus haut (MDF-2, indice 0,8), et un débit de données de dix neuf kilo-bits par seconde, une déviation de crête de quinze kiloherz environ est obtenue. Si un quartz ordinaire est utilisé pour la synthèse de fréquence, une dérive de fréquence d'environ un kiloherz peut se rencontrer en température, ce qui n'est pas négligeable devant l'excursion de la modulation, et peut provoquer des effets non linéaires à la démodulation et donc une dégradation du taux d'erreurs binaires. Pour pallier cela, il est intéressant de synchroniser la base de temps d'un modem de tête et celles des modems d'usager correspondants. Sur le schéma de circuit de synchronisation de la figure 6, un oscillateur 20 à quartz et à fréquence ajustable fournit un signal dont la fréquence est divisée par six-cent-vingt-cinq dans un diviseur 21. Le signal descendant FR présent sur la borne 9, après changement de fréquence dans un mélangeur 18, est démodulé dans un démodulateur de fréquences 27 (grâce au fait que le canal descendant a un bon rapport signal/bruit cette démodulation est toujours possible), puis le signal démodulé traverse un circuit non-linéaire 26, un filtre passe-bande 25 centré sur 19,2 kHz, et un limiteur 24 et est enfin amené à un comparateur de phase 22. Le signal résultant de la comparaison, après filtrage dans un filtre passe-bas 23, commande la fréquence de l'oscillateur 20. Ce circuit fonctionne de la façon suivante : le modem de tête émet, par exemple entre les trames de protocole, un train de données identifiable, par exemple 101010... etc, dont la fréquence de bits est telle qu'après démodulation dans le démodulateur 27, elles engendrent un signal à fréquence de 19,2 kHz qui est comparé dans le comparateur 22 au signal local engendré à la sortie du diviseur 21. La fréquence de l'oscillateur 20 est donc de 19,2 kHz x 625 = 12 MHz : c'est la fréquence de référence pour les oscillateurs synthétisés 1 et 101 de la figure 4 et, divisée par 120, elle fournit aussi la référence à 100kHz reçue par le circuit d'asservissement 11 de la figure 3. Ainsi l'erreur moyenne de centrage du canal d'émission du modem d'usager est nulle.

Dans la partie d'un modem d'usager destinée à l'émission, comme on l'a expliqué plus haut, on désire que la constante de temps de la boucle à verrouillage de phase de l'oscillateur générant la porteuse d'émission soit variable.

A cet effet, le montage de la figure 7 est employé. Il s'agit d'un mode de réalisation du circuit 11 de la figure 3, et l'oscillateur 4 est commun aux deux figures. Cet oscillateur 4 fournit un signal qui, après changement de fréquence dans un élément 30, qui symbolise ici les éléments 5, 7, 2, 10 de la figure 3, est comparé en fréquence (et non en phase) dans un comparateur 29 avec une référence de fréquence amenée sur la borne 8 (référence à 2FI = 21,4 MHz obtenue à partir de l'oscillateur 20 de la figure 6). Le signal résultant de la comparaison est mémorisé dans une capacité 34 après passage dans un interrupteur 33 (il s'agit bien entendu d'un interrupteur électronique). Ce montage constitue un filtre passe-bas dont la constante de temps dépend du rythme d'ouverture de l'interrupteur 33. Celui-ci est "manoeuvré" par un oscillateur auxiliaire 31, dont chaque période d'oscillation déclenche une impulsion d'un circuit monostable 32. L'oscillateur auxiliaire 31 n'a rien à voir avec les oscillateurs de signal rencontrés jusqu'ici : c'est un élément dont la fréquence est commandée en fonction du numéro de canal et est de l'ordre de 50 Hz. Par la commande de cette fréquence on obtient que la constante de temps de la boucle d'asservissement de l'oscillateur est variable en fonction du numéro de canal.

L'oscillateur comportant par exemple de façon connue une diode "varicap" sur la tension de laquelle agit la boucle d'asservissement pour amener la fréquence à la bonne valeur moyenne, il est facile d'appliquer la susdite modulation, par exemple au moyen d'une deuxième diode "varicap". Le taux de modulation, donc l'indice de la modulation FSK qui est un critère essentiel, est alors fonction du rapport entre les valeurs de capacité des deux diodes "varicap", et il est ainsi dépendant de la fréquence centrale utilisée. Pour pallier cet inconvénient, on démodule localement la fréquence intermédiaire issue du diviseur 2 de la figure 3 et porteuse de la modulation de l'oscillateur 4, de façon à connaître le taux de modulation et à pouvoir le régler par asservissement. Le démodulateur employé à cet effet est représenté à la figure 8. Il comporte un limiteur 36 à la sortie duquel le trajet de signal est divisé en deux branches : l'une d'elles contient un filtre passe-bande 37 centré sur la valeur centrale nominale de la fréquence intermédiaire FI, et la deuxième branche contient un réseau de déphasage 38 destiné à introduire un déphasage égal à celui produit par le filtre 37 dans la première branche, de façon à produire un signal en phase avec le signal de soitie du filtre dans la plage de fréquences. Les signaux sortants des deux branches sont multipliés dans un multiplieur 40 et le signal résultant amplifié dans un amplificateur 41 traverse enfin un filtre passe-bas 42. Le limiteur 36 est par exemple fait d'une simple porte MOS, et le filtre 37 est un filtre céramique bon marché. Le mélangeur 40 et l'amplificateur 41 peuvent en pratique être faits d'un seul transistor en émetteur commun qui joue à la fois le rôle de mélangeur HF et d'amplificateur BT, et le filtre 42 est réalisé au moyen d'une simple capacité. Un tel démodulateur ressemblè à des démodulateurs connus, néanmoins il est original du fait que c'est la variation de la réponse en amplitude du filtre 37 qui est utilisée pour produire la démodulation, et non le déphasage comme il est d'usage. La stabilité en température et la reproductibilité sont celles du filtre céramique, donc généralement très bonnes. L'homme du métier peut facilement connecter ces moyens (pour mesurer le taux de modulation) à un élément connu de réglage du taux de modulation de façon à régler la valeur moyenne de ce taux et constituer ainsi les dispositifs de contrôle de modulation, qui apparaissent sur la figure 4 sous les références 46 (dans le modem de tête) et 47 (dans le modem d'usager).

## Revendications

1. Réseau cablé arborescent et interactif destiné à desservir des appareils (15) à la fois émetteurs et récepteurs qui comportent un dispositif modulateur-démodulateur, ces derniers fonctionnant en émission dans une première gamme de fréquences, c'est-à-dire avec une première fréquence porteuse (FE), et en réception dans une deuxième gamme de fréquences, c'est-à-dire avec une deuxième fréquence porteuse (FR), chacune des deux susdites gammes de fréquences étant divisée en une pluralité de sous-gammes utilisant chacune une fréquence porteuse différente, cet ensemble d'appareils étant associé à un serveur central (14) avec au moins un dispositif modulateur-démodulateur de tête, caractérisé en ce que, chaque appareil (15), à la fois émetteur et récepteur, étant destiné à recevoir un programme de télévision ou de radio, le serveur central est muni d'un dispositif modulateur-démodulateur de tête (13) pour chacune des sous-gammes, et plusieurs appareils d'une même sous-gamme (16), c'est-à-dire travaillant avec la même paire de fréquences porteuses, sont reliés à un même dispositif modulateur-démodulateur de tête (13), et pour chacun de ces dispositifs la fréquence porteuse (FE) de la première gamme est appariée avec la fréquence porteuse (FR) de la deuxième gamme, cependant que le serveur central est muni de moyens pour interroger tour à tour l'ensemble des appareils d'une même sous-gamme selon un processus de sondage circulaire.

2. Réseau cablé selon la revendication 1, caractérisé en ce qu'un dispositif modulateur-démodulateur de tête (13) est muni de moyens de détection de la qualité de réception des signaux provenant des susdits appareils (15), de moyens pour déterminer, lorsque cette qualité est insuffisante, une nouvelle fréquence à utiliser, et de moyens pour incorporer dans le signal émis vers lesdits appareils des informations indiquant la nouvelle fréquence à utiliser.

3. Réseau cablé selon la revendication 2, caractérisé en ce que, les signaux étant numériques, les moyens de détection de la qualité de réception comportent une base de temps fournissant des fenêtres temporelles (44) de largeur à peu près égale au quart d'un temps de bit et centrées sur les instants présumés des transitions du diagramme de l'oeil, un détecteur pour détecter une transition du signal située hors de ces fenêtres, un compteur pour compter le nombre de détections de telles transitions, compteur qui fournit un signal d'insuffisance de qualité pour un nombre prédéterminé de détections.

4. Réseau cablé selon l'une quelconque des revendications 1 à 3, caractérisé en ce que chaque dispositif modulateur-démodulateur de tête (13) est muni de moyens pour incorporer dans le signal émis vers lesdits appareils des données identifiables qui servent à synchroniser les fréquences des dispositifs modulateurs-démodulateur desdits appareils par rapport à celles du dispositif modulateur-démodulateur de tête.

5. Réseau cablé selon l'une des revendications précédentes, caractérisé en ce que la valeur de la fréquence d'émission (FE) du dispositif modulateur-démodulateur est égale à la valeur de la fréquence de réception (FR) plus ou moins un premier nombre entier de fois la valeur de la susdite fréquence intermédiaire (FI), le tout étant divisé par un deuxième nombre entier.

6. Réseau cablé selon la revendication 5, caractérisé en ce que le dispositif modulateur-démodulateur émet dans la gamme de fréquences 10-30 MHz et reçois dans la gamme de fréquences 47-87 MHz et utilisant la fréquence intermédiaire 10,7 MHz, caractérisé en ce que ledit premier nombre entier est égal à un, et ledit deuxième nombre entier est égal à trois.

7. Réseau cablé selon l'une des revendications 5 ou 6, caractérisé en ce que le dispositif modulateur-démodulateur est muni d'un premier oscillateur (1) dont la fréquence est égale à la différence entre la fréquence de réception et la fréquence désirée comme fréquence intermédiaire, et ce qu'il comprend un deuxième oscillateur (4) dont la fréquence est commandable et un circuit d'asservissement muni d'une entrée (8) pour un signal dont la fréquence doit être réglée et qui fournit un signal de commande de la fréquence du deuxième oscillateur en fonction de l'écart entre la fréquence du signal appliqué à la dite entrée (8) et une fréquence de référence (100 KHZ), en ce que les signaux des deux oscillateurs sont amenés respectivement à deux entrées d'un mélangeur (5), dont le signal mélangé est amené à un premier diviseur de fréquence (7) dont le signal résultant est amené à l'entrée du circuit d'asservissement et en ce que le signal dudit deuxième oscillateur est amené à un second diviseur de fréquence (3) pour fournir en sortie de ce dernier le signal à fréquence d'émission du dispositif modulateur-démodulateur.

8. Réseau cablé selon la revendication 7, caractérisé en ce que le dispositif modulateur-démodulateur est muni de moyens pour aligner la fréquence du premier oscillateur local (1) sur le rythme binaire des données provenant du dispositif modulateur-démodulateur de tête.

9. Réseau cablé selon l'une quelconque des revendications 5 à 8, caractérisé en ce que le dispositif modulateur-démodulateur est interrogé par appel sélectif de la part d'un modem de tête, et en ce qu'il est muni d'un circuit de servo-régulation de l'amplitude de la porteuse d'émission, en ce que ce circuit est muni de moyens (56) pour fournir au moins deux valeurs de consigne prédéterminées pour ladite amplitude, et de moyens (55) pour que le passage de l'une à l'autre de ces valeurs se fasse avec un temps de transition prédéterminé.

10. Réseau cablé selon l'une quelconque des revendications 5 à 9, caractérisé en ce que le dispositif modulateur-démodulateur est muni de moyens pour décoder dans un signal reçu d'un dispositif modulateur-démodulateur de tête une information sur la sous-gamme à utiliser et de moyens pour ajuster sa fréquence d'émission en fonction de cet ordre.

11. Réseau cablé selon les revendications 7 et 10 ensemble, caractérisé en ce que la modulation pour l'émission du dispositif modulateur-démodulateur est appliquée directement sur le deuxième oscillateur (4) qui engendre la porteuse émise, et en ce que cet oscillateur est muni d'un circuit d'asservissement de fréquence qui comporte un filtre passe-bas à constante de temps réglable (33,34).

12. Réseau cablé selon la revendication 11, caractérisé en ce que le filtre passe-bas du dispositif modulateur-démodulateur est constitué par un interrupteur (33) suivi d'une capacité (34), l'interrupteur étant commandé par une impulsion de durée constante déclenchée par le signal d'un oscillateur auxiliaire (31).

13. Réseau cablé selon l'une des revendications 11 ou 12, caractérisé en ce que le dispositif modulateur-démodulateur comporte un démodulateur de fréquences (figure 8) pour démoduler sa propre fréquence intermédiaire (8) afin de connaître le taux de modulation et l'asservir.

14. Réseau cablé selon la revendication 13, caractérisé en ce que le démodulateur de fréquences du dispositif modulateur-démodulateur est muni de deux branches dont les signaux sortants sont multipliés, une première branche contenant un filtre passe-bande (37) centré sur la valeur centrale nominale de la fréquence intermédiaire, et la deuxième branche contenant un réseau de déphasage (38) destiné à introduire un déphasage égal à celui produit par le filtre dans la première branche.

**Patentansprüche**

1. Ein verzweigtes, interaktives Kabelnetz für die Verbindung von mit einer Modemvorrichtung versehenen Sende-Empfangs-Geräten (15), die in Sendebetrieb in einem ersten Frequenzbereich, d.h. mit einer ersten Trägerfrequenz (FE), und in Empfangsbetrieb in einem zweiten Frequenzbereich, d. h. einer zweiten Trägerfrequenz (FR) arbeiten, wobei jeder der beiden besagten Frequenzbereiche in eine Vielzahl an Unter-Frequenzbereiche unterteilt ist, die jeweils eine unterschiedliche Trägerfrequenz verwenden, und die Gesamtheit der Geräte mit einem Zentralrechner (14) mit wenigstens einer Kopf-Modemvorrichtung verbunden sind,

   mit dem Merkmal, das jedes Sende-Empfangsgerät (15) für den Empfang eines Fernseh- oder Radioprogramms vorgesehen ist, der Zentralrechner für jeden der Unter-Frequenzbereiche mit einer Kopf-Modemvorrichtung (13) versehen ist und mehrere Geräte eines selben Unter-Frequenzbereichs (16), d.h., die mit demselben Trägerfrequenzpaar arbeiten, mit einer Kopf-Modemvorrichtung (13) verbunden sind, und für jede dieser Vorrichtungen die Trägerfrequenz (FE) des ersten Frequenzbereichs mit der Trägerfrequenz (FR) des zweiten Frequenzbereichs gepaard ist, während der Zentralrechner mit Mitteln versehen ist, um die Gesamtheit der Geräte eines selben Unter-Frequenzbereichs der Reihe nach einem Kreis-Befragungsverfahren entsprechend zu befragen.

2. Ein Kabelnetz laut Anspruch 1, mit dem Merkmal, daß eine Kopf-Modemvorrichtung (13) mit Mitteln für die Erfassung der Empfangsqualität der aus den weiter oben genannten Geräten (15) kommenden Signale, Mitteln für die Bestimmung, wenn diese Qualität unzureichend ist, einer neuen zu verwendenden Frequenz und Mitteln für die Einfügung in das zu den besagten Geräten gesendete Signal von Informationen zur Anweisung der neuen zu verwendenden Frequenz versehen ist.

3. Ein Kabelnetz laut Anspruch 2, mit dem Merkmal, daß die Signale digital sind, die Mittel zur Erfassung der Empfangsqualität der Signale eine Zeitbasis beinhalten, die Zeitfenster (44) mit einer Breite bereitstellen, die etwa einem Viertel einer Bit-Zeit entsprechen und auf die vermuteten Übergangszeitpunkte des Augendiagramms ausgerichtet sind, einen Detektor zur Erfassung eines außerhalb dieser Fenster befindlichen Signalübergangs und einen Zähler zum Zählen der Anzahl derartiger erfaßter Übergänge beinhalten, wobei der Zähler ein Signal unzureichender Qualität für eine vorbestimmte Anzahl Erfassungen abgibt.

4. Ein Kabelnetz laut einem beliebigen Anspruch 1 bis 3, mit dem Merkmal, daß jede Kopf-Modemvorrichtung (13) mit Mitteln für die Einfügung in das zu den besagten Geräten gesendete Signal von erkennbaren Daten verfügt, die der Synchronisation der Frequenzen der Modemvorrichtungen der besagten Geräte in bezug auf die der Modem-Vorrichtung dienen.

5. Ein Kabelnetz laut einem der vorhergehenden Ansprüche, mit dem Merkmal, daß der Wert der Sendefrequenz (FE) der Modemvorrichtung gleich dem Wert der Empfangsfrequenz (FR) plus oder minus einer ersten Ganzzahl mal dem Wert der weiter oben aufgeführten Zwischenfrequenz (FI) ist, wobei das Ganze durch eine zweite Ganzzahl dividiert wird.

6. Ein Kabelnetz laut Anspruch 5, mit dem Merkmal, daß diese Modemvorrichtung im Frequenzbereich 10-30 MHz sendet und im Frequenzbereich 47-87 MHz empfängt und die Zwischenfrequenz 10,7 MHz verwendet, mit dem Merkmal, daß die besagte erste Ganzzahl gleich eins, und die besagte zweite Ganzzahl gleich drei ist.

7. Ein Kabelnetz laut einem der Ansprüche 5 oder 6, mit dem Merkmal, daß die Modemvorrichtung mit einem ersten Oszillator (1) ausgerüstet ist, dessen Frequenz gleich dem Unterschied zwischen der Empfangsfrequenz und der als Zwischenfrequenz gewünschten Frequenz ist, und, daß er einen zweiten Oszillator (4) mit steuerbarer Frequenz und eine Warnschaltung mit einem Eingang (8) für ein Signal enthält, dessen Frequenz geregelt werden muß und das ein Steuersignal für die Frequenz des zweiten Oszillators in bezug auf die Frequenzabweichung zwischen der Frequenz des an den besagten Eingang (8) zugeführten Signals und einer Referenzfrequenz (100 KHz) liefert, daß die Signale der beiden Oszillatoren jeweils an zwei Eingänge eines Mischers (5) geleitet werden, wobei das gemischte Signal einer ersten Frequenzweiche (7) zugeführt wird, deren ausgehendes Signal zum Eingang der Warnschaltung geführt wird, und, daß das Signal des besagten zweiten Oszillators an eine zweite Frequenzweiche (3) geführt wird, um an deren Ausgang das Sende-Frequenzsignal der Modemvorrichtung zu liefern.

8. Ein Kabelnetz laut Anspruch 7, mit dem Merkmal, daß die Modemvorrichtung mit Mitteln für die Frequenzausrichtung des ersten dezentralen Oszillators (1) auf den binären Takt der aus der Kopf-Modemvorrichtung herrührenden Daten versehen ist.

9. Ein Kabelnetz laut einem beliebigen Anspruch 5 bis 8, mit dem Merkmal, daß die Modemvorrichtung von der Kopf-Modemvorrichtung mit wahlweisem Abruf abgefragt wird, und mit dem Merkmal, daß es mit einer Servoregulierschaltung der Amplitude der Trägerfrequenz versehen ist, daß die Schaltung mit Mitteln (56) für die Bereitstellung von mindestens zwei vorbestimmten Nennwerten für die Besagte Amplitude versehen ist, und mit Mitteln (55), damit der Übergang von einem zum andern dieser Werte in einer vorbestimmten Übergangszeit verläuft.

10. Ein Kabelnetz laut einem beliebigen Anspruch 5 bis 9, mit dem Merkmal, daß die Modemvorrichtung mit Mitteln für die Dekodierung der in einem von einer Kopf-Modemvorrichtung erhaltenen Signal enthaltenen Information über den zu verwendenden Unter-Frequenzbereich und mit Mitteln versehen ist, um seine Sendefrequenz in bezug auf diesen Befehl anzugleichen.

11. Ein Kabelnetz laut den beiden Ansprüchen 7 und 10, mit dem Merkmal, daß die Sendemodulation der Modemvorrichtung direkt dem zweiten Oszillator (4) zugeführt wird, der die Sende-Trägerfrequenz erzeugt, und, daß dieser Oszillator mit einer Frequenzwarnschaltung versehen ist, die einen Filter mit regelbarer Zeitkonstante aufweist (33,34).

12. Ein Kabelnetz laut Anspruch 11, mit dem Merkmal, daß der Tiefpaßfilter der Modemvorrichtung aus einem Unterbrecher (33), gefolgt von einer Kapazität (34) gebildet wird, wobei der Unterbrecher von einem Impuls konstanter Dauer gesteuert wird, ausgelöst durch das Signal eines Hilfsoszillators (31).

13. Ein Kabelnetz laut einem der Ansprüche 11 oder 12, mit dem Merkmal, daß die Modemvorrichtung einen Frequenzdemodulator (Abbildung 8) zur Demodulierung ihrer eigenen Zwischenfrequenz (8) enthält, um die Modulationsquote zu kennen und sie zu regeln.

14. Ein Kabelnetz laut Anspruch 13, mit dem Merkmal, daß der Frequenzdemodulator der Modemvorrichtung mit zwei Zweigen versehen ist, deren ausgehenden Signale multipliziert werden, wobei ein erster Zweig einen auf den nominalen Mittelwert der Zwischenfrequenz ausgerichteten Tiefpaßfilter (37), und der zweite Zweig ein Phasenverschiebungsnetz (38) enthält, um eine Phasenverschiebung einzubringen, die der vom Filter im ersten Zweig erzeugten gleich ist.

**Claims**

1. An interactive and branched cable network adapted to be connected to apparatuses (15 )capable of receiving but also transmitting information, which apparatuses comprise a modulator-demodulator arrangement, operating in a first frequency range in the case of transmission, i.e. at a first carrier frequency (FE), and in a second frequency range in the case of reception, i.e. at a second carrier frequency (FR), each of said two frequency ranges being divided into a plurality of sub-ranges each using a different carrier frequency, said group of apparatuses being connected to a central distributor (14) provided with at least one head-end modulator-demodulator arrangement, characterized in that each in each apparatus (15) being a transmitter and a receiver at the same time and intended to receive a television or radio program, the central distributor is provided with a head-end modulator-demodulator arrangement (13) for each of the sub-ranges, and several apparatuses of one and the same sub-range (16), i.e. operating with the same pair of carrier frequencies, are connected to the same head-end modulator-demodulator arrangement (13), and for each of these arrangements the carrier frequency (FE) of the first range is matched with the carrier frequency (FR) of the second range, while the central distributor is provided with means for interrogating the apparatuses within one and the same subgroup in turns in accordance with a circular polling process.

2. A cable network as claimed in Claim 1, characterized in that the head-end modulator-demodulator arrangement (13) is provided with means for detecting the reception quality of the signals coming from said apparatuses (15), means for determining a new frequency to be used when said quality is insufficient and means for incorporating, in the signal transmitted to said apparatuses, information components indicating the new frequency to be used.

3. A cable network as claimed in Claim 2, characterized in that, since the signals are digital, the means for detecting the reception quality comprise a time base supplying temporal windows (44) having a width which is substantially equal to a quarter of a bit period and being centred at the hypothetical instants of transition in the eye pattern, a detector for detecting a transition of the signal outside said windows, a counter for counting the number of detections of such transitions, which counter supplies a signal indicating the insufficiency of quality for a predetermined number of detections.

4. A cable network as claimed in any one of Claims 1 to 3, characterized in that each head-end modulator-demodulator arrangement (13) is provided with means for incorporating identifiable data in the signal transmitted to said apparatuses, which data are used to synchronize the frequencies of the modulator-demodulator arrangements of said apparatuses with respect to the frequencies of the head-end modulator-demodulator arrangement.

5. A cable network as claimed in any one of the preceding Claims, characterized in that the value of the transmission frequency (FE) of the modulator-demodulator arrangement is equal to the value of the reception frequency (FR) plus or minus a first integer multiplied by the value of said intermediate frequency (FI), the whole being divided by a second integer.

6. A cable network as claimed in Claim 5, characterized in that the modulator-demodulator arrangement transmits in the frequency range of 10-30 MHz and receive in the frequency range of 47-87 MHz while using the intermediate frequency of 10.7 MHz, and in that said first integer is equal to one and said second integer is equal to three.

7. A cable network as claimed in any one of Claim 5 or 6, characterized in that the modulator-demodulator arrangement comprises a first oscillator (1) whose frequency is equal to the difference between the reception frequency and the frequency desired as an intermediate frequency, and in that it comprises a second oscillator (4) whose frequency is controllable and a control circuit having an input (8) for a signal whose frequency must be controlled and supplying a signal for controlling the frequency of the second oscillator as a function of the difference between the frequency of the signal applied to said input (8) and a reference frequency (100 kHz), in that the signals of the two oscillators are applied to two inputs of a mixer (5) whose mixed signal is applied to a first frequency divider (7) whose resultant signal is applied to the input of the control circuit, and in that the signal of said second oscillator is applied to a second frequency divider (3) for supplying the signal at the transmission frequency of the modulator-demodulator arrangement at the output of said divider.

8. A cable network as claimed in Claim 7, characterized in that the modulator-demodulator arrangement is provided with means for aligning the frequency of the first local oscillator (1) with the binary rate of the data from the head-end modulator-demodulator arrangement.

9. A cable network as claimed in any one of Claims 5 to 8, characterized in that the modulator-demodulator arrangement is interrogated by way of a selective call from a head-end modem, and in that it is provided with a circuit for controlling the amplitude of the transmission carrier, in that said circuit is provided with means (56) for supplying at least two predetermined nominal values for said amplitude and with means (55) ensuring that these values change from one to the other with a predetermined transition time.

10. A cable network as claimed in any one of Claims 5 to 9, characterized in that the modulator-demodulator arrangement is provided with means for decoding information about the sub-range to be used in a signal received from a head-end modulator-demodulator arrangement, and with means for adjusting its transmission frequency as a function of this order.

11. A cable network as claimed in Claim 7 and 10, characterized in that the modulation for the transmission of the modulator-demodulator arrangement is directly applied to the second oscillator (4) which generates the transmitted carrier, and in that said oscillator is provided with a frequency control circuit which comprises a low-pass filter (33, 34) having an adjustable time constant.

12. A cable network as claimed in Claim 11, characterized in that the low-pass filter of the modulator-demodulator arrangement is constituted by a switch (33) followed by a capacitance (34), the switch being controlled by a pulse having a constant duration and being triggered by the signal from an auxiliary oscillator (31).

13. A cable network as claimed in any one of Claim 11 or 12, characterized in that the modulator-demodulator arrangement comprises a frequency demodulator (Fig. 8) for demodulating the correct intermediate frequency (8) in order to know the modulation rate and to control it.

14. A cable network as claimed in Claim 13, characterized in that the frequency demodulator of the modulator-demodulator arrangement has two branches whose output signals are multiplied, a first branch comprising a bandpass filter (37) centred at the nominal central value of the intermediate frequency and the second branch comprising a phase-shifting network (38) adapted to introduce a phase shift which is equal to that produced by the filter in the first branch.

FIG.1

FIG.2

FIG.3

FIG.4

FIG.5

FIG.6

FIG.7

FIG.8